(19) Europäisches Patentamt
European Patent Office
Office européen des brevets

(11) **EP 4 647 251 A1**

(12) **EUROPEAN PATENT APPLICATION**
published in accordance with Art. 153(4) EPC

(43) Date of publication:
**12.11.2025 Bulletin 2025/46**

(21) Application number: **23914805.9**

(22) Date of filing: **26.12.2023**

(51) International Patent Classification (IPC):
**B32B 3/30** (2006.01)     **B32B 7/023** (2019.01)
**B32B 27/00** (2006.01)     **B32B 27/16** (2006.01)

(52) Cooperative Patent Classification (CPC):
**B32B 3/30; B32B 7/023; B32B 27/00; B32B 27/16**

(86) International application number:
**PCT/JP2023/046696**

(87) International publication number:
**WO 2024/147319 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2023 JP 2023000276**

(71) Applicant: **Toppan Holdings Inc.**
**Tokyo 110-0016 (JP)**

(72) Inventors:
• **MURATA, Daisuke**
  **Tokyo 110-0016 (JP)**
• **MORITA, Machiko**
  **Tokyo 110-0016 (JP)**
• **AKUTSU, Erika**
  **Tokyo 110-0016 (JP)**

(74) Representative: **TBK**
**Bavariaring 4-6**
**80336 München (DE)**

(54) **DECORATIVE SHEET**

(57)     A decorative sheet 1 includes a primary film layer 2 and a surface protection layer 5 provided on one surface of the primary film layer 2. The surface protection layer 5 has a surface provided with an uneven structure having a plurality of ridged portions protruding in a ridged pattern. The uneven structure of the surface protection layer 5 has a reduced peak height Rpk of less than 3.5 μm. The surface protection layer 5 has a mass concentration of carbon C (% by mass), a mass concentration of oxygen O (% by mass), and a mass concentration of silicon Si (% by mass) satisfying the following relational expression: $0.5 \leq \{Si/(C + O + Si)\} \times 100$.

FIG.1

**Description**

[Technical Field]

The present invention relates to a decorative sheet.

[Background Art]

Decorative sheets are used for, for example, surface decoration of interior or exterior materials, such as fittings, furniture, construction materials, and flooring, in order to impart design qualities and durability. Decorative sheets are typically widely used as decorative plates bonded to the surfaces of substrates such as wood, wooden boards, metal plates, fireproof boards, paper substrates, or resin substrates with an adhesive or the like.

Design qualities are imparted by, for example, forming wood-grain or stone-grain patterns using various printing methods. Plain decorative sheets without a pattern may be preferred. The presence or absence of patterns and the types of patterns vary depending on applications and preference.

For the design quality of a decorative sheet, the gloss of the surface is also important. A variety of decorative sheets ranging from mirrorlike, high-gloss ones to reflection-free, low gloss ones are selected depending on applications and preference.

As described above, a significant function of decorative sheets along with imparting design quality is to impart durability. Durability is determined by an overall evaluation of scratch resistance, contamination resistance, and whether they are maintained over a long period of time. Although requirements vary depending on the environment and conditions in which decorative sheets are used, decorative sheets having high performance are always in demand.

Durability is typically imparted by forming a surface protection layer on the outermost surface of the decorative sheet. In order to adjust the above-mentioned gloss, in particular, to achieve low gloss, a matting agent (matting additive) is typically added to the surface protection layer.

Furthermore, the decorative sheet is typically subjected to processes such as cutting and bending to form a decorative material such as a decorative board and thus preferred to be processable enough to tolerate these processes.

Such decorative sheets obtained in consideration of design qualities (low gloss), scratch resistance, and contamination resistance include, for example, a decorative sheet described in Patent Literature 1.

[Citation List]

[Patent Literature]

PTL 1: JP 2019-119138 A

[Summary of the Invention]

[Technical Problem]

An object of the present invention is to provide a decorative sheet that gives a smooth and highly uniform feel.

[Solution to Problem]

An aspect of the present invention provides a decorative sheet comprising:

a primary film layer; and a surface protection layer provided on one surface of the primary film layer, in which the surface protection layer has a surface provided with an uneven structure having a plurality of ridged portions protruding in a ridged pattern, the uneven structure of the surface protection layer has a reduced peak height Rpk of less than 3.5 $\mu$m, and the surface protection layer has a mass concentration of carbon C (% by mass), a mass concentration of oxygen O (% by mass), and a mass concentration of silicon Si (% by mass) satisfying the following relational expression:

$$0.5 \leq \{Si/(C + O + Si)\} \times 100$$

Another aspect of the present invention provides the decorative sheet according to the above aspect, in which the reduced peak height Rpk is 0.5 $\mu$m or more.

Still another aspect of the present invention provides the decorative sheet according to any one of the above aspects, in which the surface protection layer has a mass concentration of carbon C (% by mass), a mass concentration of oxygen O (% by mass), and a mass concentration of silicon Si (% by mass) satisfying the following relational expression:

$$0.5 \leq \{Si/(C + O + Si)\} \times 100 \leq 5.0$$

Still another aspect of the present invention provides the decorative sheet according to any one of the above aspects, in which the uneven structure of the surface protection layer has a mean width of roughness profile elements RSm of 800 μm or less. Still another aspect of the present invention provides the decorative sheet according to any one of the above aspects, in which the uneven structure of the surface protection layer has a mean width of roughness profile elements RSm of 350 μm or less.

Still another aspect of the present invention provides the decorative sheet according to any one of the above aspects, in which the mean width RSm is 10 μm or more.

Still another aspect of the present invention provides the decorative sheet according to any one of the above aspects, in which the surface protection layer has a thickness of 2 μm or more and 15 μm or less.

Still another aspect of the present invention provides the decorative sheet according to any one of the above aspects, in which the surface protection layer has a thickness of 2 μm or more and less than 10 μm.

Still another aspect of the present invention provides the decorative sheet according to any one of the above aspects, in which the surface protection layer has a gloss level of 20.0 or less.

Still another aspect of the present invention provides the decorative sheet according to any one of the above aspects, in which the surface protection layer has a gloss level of 10.0 or less.

Still another aspect of the present invention provides the decorative sheet according to any one of the above aspects, in which

at least some portions of the plurality of ridged portions are adjacent to each other in a width direction, and along the at least portions of the plurality of ridged portions adjacent to each other in the width direction, the surface protection layer, in an area with the uneven structure, has a sinusoidal shape uneven structure in a cross section parallel to the width direction and the thickness direction of the surface protection layer.

Still another aspect of the present invention provides the decorative sheet according to any one of the above aspects, in which the surface protection layer contains a cured product of an ionizing radiation-curable resin.

Still another aspect of the present invention provides the decorative sheet according to the above aspect, in which the ionizing radiation-curable resin comprises, as a main component, an acrylate having a repeating structure, the repeating structure comprises any one of ethylene oxide, propylene oxide, and ε-caprolactone, and the repeating structure has three or more repeat units.

Still another aspect of the present invention provides the decorative sheet according to the above aspect, in which the ionizing radiation-curable resin comprises acrylate as a main component, the acrylate includes a first acrylate having a repeating structure and a second acrylate having 1 to 6 functional groups, the repeating structure comprises any one of ethylene oxide, propylene oxide, and ε-caprolactone, and the repeating structure has three or more repeat units.

Still another aspect of the present invention provides a decorative material comprising: the decorative sheet according to any one of the above aspects; and a substrate to which the decorative sheet is bonded.

[Advantageous Effects of the Invention]

The present invention enables a decorative sheet that provides a smooth and highly uniform feel to be provided.

[Brief Description of the Drawings]

[Fig. 1] Fig. 1 is a cross-sectional view of a decorative material including a decorative sheet according to an embodiment of the present invention.
[Fig. 2] Fig. 2 is a cross-sectional view of a surface protection layer included in the decorative sheet in Fig. 1.
[Fig. 3] Fig. 3 is a microscope image of the surface protection layer included in the decorative sheet according to an example of the present invention.

[Description of the Embodiments]

Embodiments of the present invention will now be described with reference to the drawings. The embodiments described below are specific versions of any of the above aspects. The items described below may be incorporated into each of the above aspects singly or in combination.

The embodiments described below are merely example configurations for embodying the technical idea of the present invention, and the technical idea of the present invention should not limit the materials, shapes, structures, and the like of the components to those described below. The technical idea of the present invention can undergo various modifications within the technical scope defined by the disclosed claims.

Elements having like or similar functions are designated by the same reference numerals in the drawings referred to below, and not described redundantly. The drawings are schematic only, and the relationships between dimensions in one direction and dimensions in another direction and between the dimensions of one member and the dimensions of other members may differ from actual ones.

<1> Decorative Material and Decorative Sheet

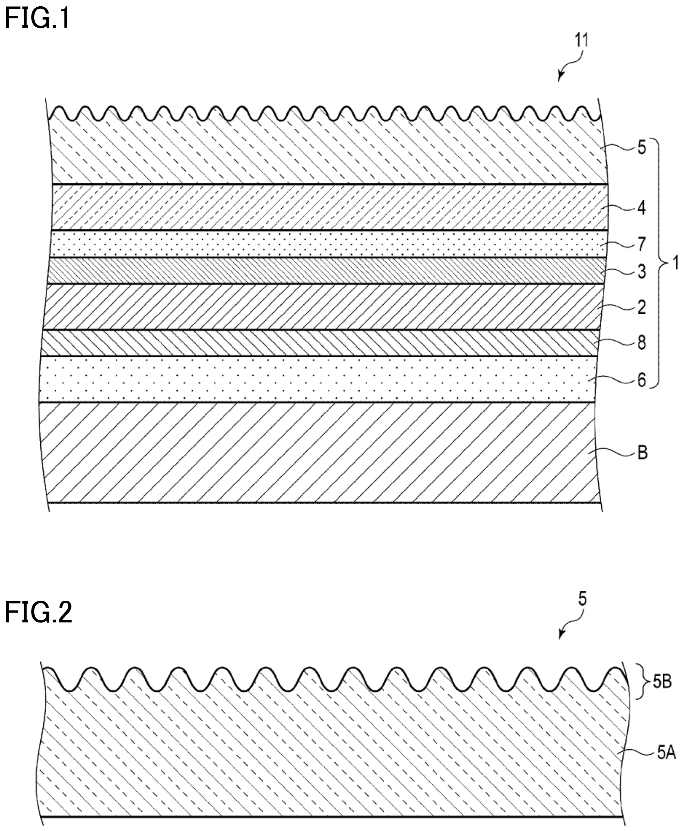

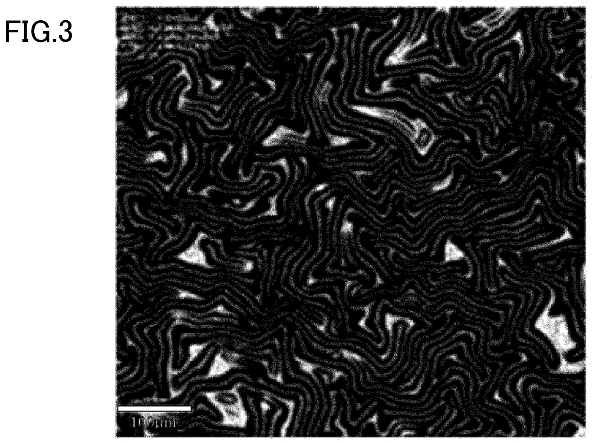

Fig. 1 is a cross-sectional view of a decorative material including a decorative sheet according to an embodiment of the present invention. Fig. 2 is a cross-sectional view of a surface protection layer included in the decorative sheet in Fig. 1. Fig. 3 is a micrograph of the surface protection layer included in the decorative sheet according to an example of the present invention.

The cross section illustrated in Fig. 2 is taken along the thickness direction of the surface protection layer. The micrograph in Fig. 3 is a plan view image obtained with a laser microscope (OLS-4000 manufactured by Olympus Corporation).

Fig. 1 illustrates a decorative material 11 including a substrate B and a decorative sheet 1 bonded thereto. Herein, the decorative material 11 is a decorative plate. The decorative plate may be flat, bent, or folded. The decorative material 11 may have a shape other than a plate.

The substrate B here is a plate material. The plate material is, for example, a wooden board, an inorganic board, a metal plate, or a composite plate made from a plurality of materials. The substrate B may have a shape other than a plate.

The decorative sheet 1 includes a primary film layer 2, a pattern layer 3, a transparent resin layer 4, a surface protection layer 5, an adhesive layer 7, a primer layer 6, and a concealing layer 8. The pattern layer 3, the adhesive layer 7, the transparent resin layer 4, and the surface protection layer 5 are stacked in this order from the primary film layer 2 on the surface of the primary film layer 2 facing away from the substrate B. The concealing layer 8 and the primer layer 6 are stacked in this order from the primary film layer 2 on the surface of the primary film layer 2 facing the substrate B. One or more of the pattern layer 3, the transparent resin layer 4, the primer layer 6, the adhesive layer 7, and the concealing layer 8 may be omitted. The components included in the decorative sheet 1 will now be described one by one.

<1.1> Primary Film Layer

The primary film layer 2 or its materials may be any material selected from, for example, paper, a synthetic resin, a foam of a synthetic resin, rubber, nonwoven fabric, synthetic paper, or a metallic foil. Examples of the paper include tissue paper, titanium paper, and resin-impregnated paper. Examples of the synthetic resin include polyethylene, polypropylene, polybutylene, polystyrene, polycarbonate, polyester, polyamide, ethylene-vinyl acetate copolymer, polyvinyl alcohol, and acrylic. Examples of the rubber include ethylene-propylene copolymer rubber, ethylene-propylene-diene copolymer rubber, styrene-butadiene copolymer rubber, styreneisoprene-styrene block copolymer rubber, styrene-butadiene-styrene block copolymer rubber, and polyurethane. As the nonwoven fabric, organic or inorganic nonwoven fabric may be used. Examples of the metal of the metal foil include aluminum, iron, gold, and silver.

In consideration of printing workability and costs, the primary film layer 2 preferably has a layer thickness in the range of 20 μm or more and 250 μm or less.

<1.2> Primer Layer

When an olefinic resin is used as a material for the primary film layer 2, the surface of the primary film layer 2 is often inert. In this case, the primer layer 6 is thus preferably interposed between the primary film layer 2 and the substrate B. When the primary film layer 2 is made from an olefinic material, the primer layer 6 may be omitted, and in order to improve adhesion between the primary film layer 2 and the substrate B, the primary film layer 2 may be subjected to a surface modification treatment such as a corona treatment, a plasma treatment, an ozone treatment, an electron beam treatment, an ultraviolet light treatment, or a dichromate treatment.

The primer layer 6 may be formed from materials such as materials described later for the pattern layer 3. The primer layer 6 is provided on the rear surface of the decorative sheet 1, and therefore in consideration of the decorative sheet 1 being wound in a web shape, an inorganic filler may be added to the primer layer 6 to avoid blocking and increase adhesion to an adhesive. Examples of the inorganic filler include silica, alumina, magnesia, titanium oxide, and barium sulfate.

<1.3> Concealing Layer

Concealment for the substrate B is imparted to the decorative sheet 1 by, for example, using a colored sheet as the primary film layer 2 or disposing an opaque concealing layer 8. The concealing layer 8 may be formed from, for example, the same materials described later for the pattern layer 3. However, since the concealing layer 8 is provided for the purpose of concealment, a pigment preferably used is, for example, an opaque pigment, titanium oxide, or iron oxide. In order to enhance the concealment, a metal such as gold, silver, copper, or aluminum may also be added to the materials for the concealing layer 8. Typically, aluminum flakes are added.

<1.4> Pattern Layer

The pattern layer 3 is a layer obtained by printing a pattern on the primary film layer 2 using ink. For example, nitrocellulose, cellulose, a vinyl chloride-vinyl acetate copolymer, polyvinyl butyral, polyurethane, acrylic, polyesters, or modified products thereof may be used singly or in combination as an ink binder. The binder may be any of an aqueous binder, a solvent-based binder, and an emulsion binder and may be a one-part binder or a two-part binder including a curing agent. The pattern layer 3 may be formed by a method for curing a layer of curable ink by irradiation with ultraviolet light, an electron beam, or the like. Among others, the most typical method is the use of a urethane-based ink cured by isocyanate. In addition to the binder, the ink used to form the pattern layer 3 may further contain, for example, a colorant as a pigment or a dye, an extender pigment, a solvent, and various additives contained in general ink. Examples of highly versatile pigments include condensed azo, insoluble azo, quinacridone, isoindoline, anthraquinone, imidazolone, cobalt, phthalocyanine, carbon, titanium oxide, iron oxide, and pearl pigments such as mica.
Besides the application of ink, it is also possible to apply a design to the pattern layer 3 by vapor deposition or sputtering of various metals. In particular, the ink preferably has a photostabilizer added thereto. This addition can suppress degradation of the decorative sheet 1 itself caused by photodegradation of ink and prolong the life of the decorative sheet 1.

<1.5> Adhesive Layer

The adhesive layer 7 is a layer also called a heat-sensitive adhesive layer, an anchor coat layer, or a dry lamination adhesive layer.
The resin material for the adhesive layer 7 is not limited to any particular one, and can be appropriately selected for use from, for example, an acrylic, polyester-based, polyurethane-based, or epoxy-based resin material. Alternatively, as the resin material for the adhesive layer 7, for example, an ethylene-vinyl acetate copolymer resin-based adhesive can also be used. The coating method can appropriately be selected according to, for example, the viscosity of the adhesive. Gravure coating is typically used, and the adhesive layer 7 is formed on the top of the pattern layer 3 by gravure coating and then laminated with the transparent resin layer 4. The adhesive layer 7 may be omitted when sufficient adhesion strength is achieved between the transparent resin layer 4 and the pattern layer 3.

<1.6> Transparent Resin Layer

A suitable resin material for the transparent resin layer 4 is an olefinic resin. Examples of the olefinic resin include, besides polypropylene, polyethylene, polybutene, and the like, homopolymers of $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene) or copolymers of two or more of these $\alpha$-olefins, and copolymers of ethylene or an $\alpha$-olefin with another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, and an ethylene-butyl acrylate copolymer.
In order to improve the surface strength of the decorative sheet 1, highly crystalline polypropylene is preferably used as the resin of the transparent resin layer 4. To the transparent resin layer 4, various additives can be added as necessary, such as a thermal stabilizer, a photostabilizer, an anti-blocking agent, a catalyst scavenger, a colorant, a light scattering agent, and a matting agent. The thermal stabilizer is typically added in any combination between, for example, phenol-based, sulfur-based, phosphorus-based, and hydrazine-based thermal stabilizers, and the photostabilizer is typically added in any combination between hindered amine-based photostabilizers.

<1.7> Surface Protection Layer

The surface protection layer 5 includes a core portion 5A and a plurality of ridged portions 5B protruding in a ridged pattern from one surface of the core portion 5A. The ridged portions 5B form an uneven structure.

In the decorative sheet 1 according to the present embodiment, the ridged pattern refers to the shape of protrusions that are lines in plan view. The ridged portions 5B may have a curved or linear shape in plan view, but is preferably curved from the viewpoint of fingerprint resistance on the decorative sheet 1. Each of the ridged portions 5B may or may not branch in plan view. In the present disclosure, for example, the ridged portions 5B constitute a part from the bottom to the top of the uneven shape formed in the surface of the surface protection layer 5, and the core portion 5A refers to the part of the surface protection layer 5 except the ridged portions 5B.

The ridged portions 5B are, for example, each curved as illustrated in Fig. 3, and at least some of them are adjacent to each other in the width direction. Along at least some of the ridged portions 5B adjacent to each other in the width direction, as illustrated in Fig. 2, the part having an uneven structure has a waveform such as a sinusoidal shape in a cross section of the surface protection layer 5 parallel to the width direction and the thickness direction of the surface protection layer 5.

The uneven structure of the surface protection layer 5 has a reduced peak height Rpk of less than 3.5 $\mu$m. The reduced peak height Rpk is a surface texture parameter defined in JIS B 0671-2:2002. The reduced peak height Rpk is more preferably 3.0 $\mu$m or less and still more preferably 2.8 $\mu$m or less. A decorative sheet with a large reduced peak height Rpk may provide a rough feel to a user when the user runs their skin over the surface of the surface protection layer, for example, when the user runs a finger over the surface of the surface protection layer.

The reduced peak height Rpk is preferably 0.5 $\mu$m or more, more preferably 0.8 $\mu$m or more, and still more preferably 1.0 $\mu$m or more. A decorative sheet with a small reduced peak height Rpk may generate significant friction when a user runs their skin over the surface of the surface protection layer, for example, when the user runs a finger over the surface of the surface protection layer.

The uneven structure of the surface protection layer 5 has a mean width of the roughness profile elements RSm of preferably 800 $\mu$m or less, more preferably 550 $\mu$m or less, still more preferably 350 $\mu$m or less, still more preferably 320 $\mu$m or less, and still more preferably 300 $\mu$m or less. The mean width of the roughness profile elements RSm is a surface texture parameter defined in JIS B 0601:2013. The mean width of the roughness profile elements RSm is preferably within the above range in order to provide a smooth feel to a user when the user runs their skin over the surface of the surface protection layer, for example, when the user runs a finger over the surface of the surface protection layer.

The mean width RSm is preferably 10 $\mu$m or more, more preferably 50 $\mu$m or more, and still more preferably 80 $\mu$m or more. It is difficult to produce a structure with a small mean width RSm and a moderate reduced peak height Rpk.

The surface protection layer 5 has a mass concentration of carbon C (% by mass), a mass concentration of oxygen O (% by mass), and a mass concentration of silicon Si (% by mass) satisfying relational expression (1):

$$0.5 \leq \{Si/(C + O + Si)\} \times 100 \ (1)$$

The surface protection layer 5 contains an ionizing radiation-curable resin and silica particles as described later. The surface protection layer 5 satisfying relational expression (1) above allows the ridged portions 5B to be produced uniformly over a large area, improving the uniformity of the tactile feel. From the same perspective, the value of $\{Si/(C + O + Si)\} \times 100$ is preferably greater than or equal to 0.75 and more preferably greater than or equal to 1.0.

In the surface protection layer 5, C (% by mass), O (% by mass), and Si (% by mass) preferably satisfy relational expression (2):

$$0.5 \leq \{Si/(C + O + Si)\} \times 100 \leq 5.0 \ (2)$$

The value of $\{Si/(C + O + Si)\} \times 100$ that is smaller than or equal to 5.0 is preferable in terms of, for example, scratch resistance, contamination resistance, and weather resistance. From the same perspective, the value of $\{Si/(C + O + Si)\} \times 100$ is more preferably smaller than or equal to 3.5 and still more preferably smaller than or equal to 2.0.

SEM-EDX analysis (scanning electron microscope-energy dispersive X-ray spectroscopy)

The amounts of C (% by mass), O (% by mass), and Si (% by mass) contained in the surface protection layer 5 can be measured by scanning electron microscopy (SEM) and energy dispersive X-ray spectroscopy (EDX). EDX is an elementary analysis technique that detects characteristic X-rays generated by irradiation with an electron beam and analyzes the characteristic X-rays based on their energy. The analysis here was performed under the analysis conditions described below, using Regulus 8220 manufactured by Hitachi High-Tech Corporation as the SEM and AZtecLive/Ultim Max 170 manufactured by Oxford and supplied with the SEM as the EDX device.

Analysis Conditions

The surface of the surface protection layer 5 was subjected to conductive treatment (Pt sputtering, 40 mA, 20 seconds), and the topcoated surface underwent SEM-EDX analysis under the following conditions:

    Acceleration voltage: 15 kV
    Emission current: 10 $\mu$A
    Probe current: high
    Condensing lens: 1
    Measurement time: 60 sec
    Measurement magnification: 500x

The decorative sheet 1 according to the present embodiment has a high degree of uniformity in its smooth feel, as described below.

Fig. 3 is a micrograph obtained by imaging a decorative sheet according to an example of the present invention. This micrograph shows a rectangular micro-region measuring about a few hundred micrometers on each side.

In the micro-region shown by the micrograph in Fig. 3, the wrinkles corresponding to the ridged portions 5B are formed uniformly. The uniformity of the wrinkles contributes to the uniformity of the tactile feel. Thus, a decorative sheet that provides a highly uniform smooth feel needs to, for example, have uniform wrinkles, as shown by the micrograph in Fig. 3.

However, even when wrinkles are uniform in such a specific micro-region, other regions may have wrinkles formed in different form than the wrinkles shown in Fig. 3 or may have no wrinkles in some areas. It may not be possible to determine whether wrinkles are uniform across the entire surface of the surface protection layer 5 by observing a microscope image obtained by imaging a specific micro-region with the above dimensions or observing the decorative sheet with the naked eye. With nonuniform wrinkles in the surface of the surface protection layer 5, even when the nonuniformity of the wrinkles is not confirmed by observing a microscope image obtained by imaging a specific micro-region or observing the decorative sheet with the naked eye, this nonuniformity can be perceived as a different tactile feel when the user runs their skin over the surface of the surface protection layer 5.

The decorative sheet 1 can be obtained by the method described later. The decorative sheet 1 has the characteristics described above. The decorative sheet 1 provides a smooth feel to a user when the user runs their skin over the surface of the surface protection layer 5, and the smooth feel is highly uniform.

The surface protection layer 5 has a thickness of preferably 2 $\mu$m or more and 15 $\mu$m or less, more preferably 2 $\mu$m or more and less than 10 $\mu$m, and still more preferably 2 $\mu$m or more and less than 8 $\mu$m. When the surface protection layer 5 is thinner, it becomes more difficult to increase the reduced peak height Rpk and the mean width RSm. When the surface protection layer 5 is thicker, it becomes easier to increase the reduced peak height Rpk and the mean width RSm.

The thickness of the surface protection layer 5 is the thickness of a layer that is equal in apparent area and volume to the surface protection layer 5 and has a flat surface. The thickness of the surface protection layer 5 is determined by, for example, the following method. First, a cross section parallel to the thickness direction of the surface protection layer 5 and perpendicular to the longitudinal direction of the ridged portions 5B is imaged. Next, from this cross-sectional image, the dimension of the surface protection layer 5 in the width direction of the ridged portions 5B and the area of the cross section of the surface protection layer 5 are determined. The thickness of the surface protection layer 5 is a value obtained by dividing the area by the above dimension.

When the surface protection layer coating solution described later contains no solvent, the coating film made from the surface protection layer coating solution has the same thickness as the thickness of the surface protection layer 5.

The surface protection layer 5 has a gloss level of preferably 20.0 or less, more preferably 10.0 or less, and still more preferably 8.0 or less. As used herein, the term "gloss level" is a measurement value obtained by measurement using a gloss meter in conformity with JIS Z 8741:1997, with an incidence angle of 60 degrees.

<2> Method for Producing Decorative Sheet

The decorative sheet 1 is produced by, for example, the following method. For simplicity, explanation regarding the pattern layer 3, the transparent resin layer 4, the primer layer 6, the adhesive layer 7, and the concealing layer 8 will be omitted here.

First, a coating film made from the surface protection layer coating solution is formed over one surface of the primary film layer 2. The coating film can be formed by various printing methods such as gravure printing, offset printing, screen printing, electrostatic printing, and inkjet printing or various coating methods such as roll coating, knife coating, micro-gravure coating, or die coating.

The surface protection layer coating solution contains an ionizing radiation-curable resin. The ionizing radiation here refers to a charged particle beam such as an electron beam. The ionizing radiation-curable resin is cured by irradiation with ionizing radiation. The ionizing radiation-curable resin may also be cured by irradiation with ultraviolet light. The ionizing radiation-curable resin used herein is cured by irradiation with light with a wavelength of 200 nm or less and also has a high absorption coefficient for this light.

In the surface protection layer coating solution, when the total solid content is defined as 100 parts by mass, the amount of the ionizing radiation-curable resin is preferably greater than or equal to 60 parts by mass, more preferably greater than or equal to 70 parts by mass, and still more preferably greater than or equal to 80 parts by mass. As the ionizing radiation-curable resin, known resins such as various monomers and commercially available oligomers can be used, and examples of known resins that can be used include (meth)acrylic resins, silicone-based resins, polyester-based resins, urethane-based resins, amide-based resins, and epoxy-based resins. The ionizing radiation-curable resin may be either an aqueous resin or a non-aqueous (organic solvent-based) resin.

The main component of the ionizing radiation-curable resin is preferably acrylate. As used herein, the main component of the ionizing radiation-curable resin refers to 60 parts by mass or more when the total solid content of the ionizing radiation-curable resin is defined as 100 parts by mass. The ionizing radiation-curable resin preferably contains acrylate in an amount of 70 parts by mass or more, and more preferably 80 parts by mass or more.

The acrylate is preferably bifunctional or higher acrylate and more preferably trifunctional or higher acrylate. To obtain the surface protection layer 5 having high scratch resistance, the acrylate is preferably trifunctional or higher. Although there is no upper limit to the number of functional groups in the acrylate, in one example, the acrylate is hexafunctional or lower.

The acrylate preferably has a repeating structure. The repeating structure is, for example, any one of an ethylene oxide (EO) structure, a propylene oxide (PO) structure, and an ε-caprolactone (CL) structure. The repeating structure is preferably ethylene oxide or propylene oxide. In the trifunctional or higher acrylate having a repeating structure, the above-described repeating structure may be interposed in a ring-open state between acryloyl and methylol.

The repeating structure preferably has three or more repeat units. The use of acrylate having a large number of repeat units increases the likelihood that the cured film will expand in an in-plane direction in the second irradiation step described later, and accordingly wrinkles corresponding to the ridged portions 5B are likely to occur in the surface of the coating film. In addition, wrinkles can be generated uniformly over a large area, contributing to improvement in the uniformity of the tactile feel. However, as the number of repeat units increases, the crosslink density decreases, and also the surface protection layer decreases in scratch resistance.

The trifunctional acrylate having a repeating structure is, for example, EO-modified, PO-modified, or CL-modified trimethylolpropane triacrylate, glycerin triacrylate, isocyanurate triacrylate, or pentaerythritol triacrylate. In the trifunctional acrylate having a repeating structure, the repeating structure preferably has 3 or more and 30 or less repeat units and more preferably 3 or more and 20 or less repeat units.

The tetrafunctional acrylate having a repeating structure is, for example, EO-modified, PO-modified, or CL-modified pentaerythritol tetraacrylate. In the tetrafunctional acrylate having a repeating structure, the repeating structure preferably has 12 or more repeat units, more preferably 12 or more and 50 or less repeat units, and still more preferably 20 or more and 50 or less repeat units.

The number of repeat units in the above-described repeating structure can be analyzed by MALDI-TOF-MS. The ionizing radiation-curable resin may have a molecular weight distribution. When the resin has a molecular weight distribution, the number of repeat units corresponds to the molecular weight at the highest peak in a MALDI-TOF-MS mass spectrum.

As described above, the main component of the ionizing radiation-curable resin is preferably acrylate. The acrylate may be made of the above-described acrylate. Alternatively, the acrylate may be made of the above-described acrylate (hereinafter, referred to as the first acrylate) and a second acrylate different from the first acrylate. In this case, the mixing ratio between the first acrylate and the second acrylate may be, but is not limited to, for example, a mass ratio within the range of 90:10 to 20:80. The second acrylate is, for example, an acrylate having functional groups from one to six.

In one example, the acrylate may be made of the first acrylate having a repeating structure and the second acrylate having functional groups from one to six. In this example, the repeating structure of the first acrylate is any one of ethylene oxide, propylene oxide, and ε-caprolactone, and the repeating structure has three or more repeat units.

The second acrylate preferably has no repeating structure. That is, the second acrylate is preferably an acrylate having functional groups from one to six and no repeating structure. Specifically, the second acrylate is preferably free of an ethylene oxide repeating structure, a propylene oxide repeating structure, and an ε-caprolactone repeating structure.

Examples of the second acrylate include trimethylolpropane triacrylate, pentaerythritol tetraacrylate, dipentaerythritol pentaacrylate, and dipentaerythritol hexaacrylate.

The use of the second acrylate in addition to the first acrylate tends to reduce the reduced peak height Rpk and increase the mean width of the roughness profile elements RSm. As a result, the gloss level of the surface protection layer 5 can be raised to increase the variety of gloss level options, and the thickness of the surface protection layer 5 can be increased to increase the variety of thickness options.

As described above, the surface protection layer coating solution contains silica particles. The surface protection layer coating solution containing silica particles enables wrinkles to be more uniformly produced on the surface of the coating film in the second irradiation step described later, contributing to improvement in the uniformity of the tactile feel.

The surface protection layer coating solution may further contain other particles than the silica particles. Examples of other particles than the silica particles include particles made from organic materials such as polyethylene (PE) wax, polypropylene (PP) wax, and resin beads or particles made from inorganic materials such as glass, alumina, titania, zirconia, calcium carbonate, and barium sulfate. The particles other than the silica particles may be contained in the surface protection layer coating solution in amounts of, for example, 20% by mass or less of all the particles.

The above-described particles including the silica particles preferably have an average particle size (D50) of 10 $\mu$m or less. The average particle size (D50) of the particles is more preferably 1 $\mu$m or more and 8 $\mu$m or less and still more preferably 2 $\mu$m or more and 6 $\mu$m or less. When large particles are used, the particles may easily detach from the surface protection layer 5, making it difficult to achieve high scratch resistance. Small particles are less effective in generating uniform wrinkles.

As used herein, the average particle size (D50) may be a median diameter (D50) measured by a laser diffraction/scattering particle size distribution analyzer. When the surface protection layer coating solution contains particles, the surface protection layer 5 obtained from the coating solution also contains the particles. The average particle size of the particles contained in the surface protection layer 5 may be a value obtained by actually measuring and averaging the particle sizes of multiple particles through cross-section observation. The value thus obtained is substantially the same value as the median diameter (D50) measured by a laser diffraction/scattering particle size distribution analyzer. Thus, the above-described range of the average particle size may also be read as the range of the average particle size of the particles contained in the surface protection layer 5.

The amount of the contained particles including the silica particles is, relative to 100 parts by mass of the ionizing radiation-curable resin, preferably 1.3 parts by mass or more and 22 parts by mass or less, more preferably 1.3 parts by mass or more and 15 parts by mass or less, and still more preferably 3 parts by mass or more and 10 parts by mass or less. When the surface protection layer coating solution contains no particles other than silica particles, the above-described amount refers to the amount of the contained silica particles. The amount of particles within the above-described range is particularly effective in generating uniform wrinkles.

The surface protection layer coating solution may further contain a solvent or additives for improving the functionality of the final product, such as an antibacterial agent and a fungicide. The surface protection layer coating solution may further contain other additives such as an ultraviolet absorber and a light stabilizer. Examples of usable ultraviolet absorbers include benzotriazole-based, benzoate-based, benzophenone-based, and triazine-based agents. Examples of usable light stabilizers include hindered amine-based agents. The method described here can form the surface protection layer 5 with a low gloss level without a matting agent (matting additive).

When a first irradiation step described later is performed or when the entire coating film made from the surface protection layer coating solution is cured with ultraviolet radiation in a third irradiation step described later, the surface protection layer coating solution preferably further contains a photoinitiator. Examples of the photoinitiator include, but are not limited to, benzophenone-based, acetophenone-based, benzoin ether-based, and thioxanthone-based photoinitiators.

The amount of the contained photoinitiator is, relative to 100 parts by mass of the ionizing radiation-curable resin, preferably 0.1 parts by mass or more and 10 parts by mass or less, more preferably 0.25 parts by mass or more and 8 parts by mass or less, and still more preferably 0.5 parts by mass or more and 6 parts by mass or less. When the amount of the photoinitiator is smaller than 0.1 parts by mass, the effects in the first irradiation step described later are less likely to appear. When the amount of the photoinitiator is greater than 10 parts by mass, the coating film is fully cured, making wrinkles less likely to form in the following second irradiation step.

After the coating film made from the surface protection layer coating solution is formed, the first irradiation step is preferably performed to partially cure the coating film. In the first irradiation step, the coating film is irradiated with light with a wavelength of about 200 nm or more and 400 nm or less (hereinafter referred to as the first irradiation light). The partial curing of the coating film in the first irradiation step enables wrinkles to be formed more uniformly in the second irradiation step described later. Furthermore, the irradiation conditions in the first irradiation step allow the design of the depth of the wrinkles, enabling the texture to be adjusted. The implementation of the first irradiation step is not essential, but whether to implement this step should be determined based on the properties of the desired product.

For the first irradiation step, for example, a high pressure mercury lamp, a metal halide lamp, or a single-wavelength LED lamp that emits light with a wavelength of 200 nm or more and 400 nm or less can be selected and used.

The integrated light intensity of the first irradiation light is preferably 2 mJ/cm$^2$ or more and 100 mJ/cm$^2$ or less, more preferably 10 mJ/cm$^2$ or more and 80 mJ/cm$^2$ or less, and still more preferably 20 mJ/cm$^2$ or more and 60 mJ/cm$^2$ or less. When the integrated light intensity is reduced, the effects in the first irradiation step are less likely to appear. When the integrated light intensity is increased, the coating film is fully cured, making it difficult to form wrinkles in the following

**EP 4 647 251 A1**

second irradiation step.

After the coating film made from the surface protection layer coating solution is formed or the first irradiation step is performed, the second irradiation step is performed. In the second irradiation step, the coating film is irradiated with light with a wavelength of 200 nm or less (hereinafter referred to as the second irradiation light). The ionizing radiation-curable resin contained in the surface protection layer coating solution has a high absorption coefficient for the second irradiation light. Therefore, the second irradiation light incident on the coating film can reach a position of only tens to hundreds of nanometers below the outermost surface. Thus, in the second irradiation step, cross-linking reactions proceed in the surface area of the coating film to form an ultrathin cured film, whereas the other areas remain uncured because cross-linking reactions do not proceed.

The coating film after the second irradiation step has wrinkles in its surface that correspond to the ridged portions 5B. The present inventors believe that the surface of the coating film wrinkles in the second irradiation step for the following reasons.

As described above, the second irradiation light can reach a position of only tens to hundreds of nanometers below the outermost surface of the coating film. That is, the ionizing radiation-curable resin undergoes cross-linking reaction only in the surface of the coating film. The irradiation with the second irradiation light causes the monomers in the surface of the coating film to cross-link via their functional groups, forming a cured film. However, not all of the functional groups are used for cross-linking between the monomers in the surface of the coating film. That is, uncrosslinked functional groups may remain in the cured film.

Since the second irradiation light does not reach monomers positioned at a distance from the surface of the coating film, these monomers undergo no cross-linking reaction. However, some of the monomers positioned at a distance from the surface of the coating film move to the cured film, where they undergo cross-linking reaction. In this manner, the number of molecules involved in cross-linking reaction increases.

When the number of molecules involved in cross-linking reaction increases in the surface of the coating film, the volume of the cured film increases. Since cross-linking reaction occurs only in the surface of the coating film, the cured film cannot grow in volume in the thickness direction, but expands in an in-plane direction. This wrinkled the surface of the coating film.

The second irradiation light can be extracted from excimer vacuum ultraviolet (VUV) light. The excimer VUV light can be produced from a lamp that uses a noble gas or a noble gas halide compound. When a lamp with a noble gas or a noble gas halide compound gas sealed in it is externally provided with high energy electrons, the lamp generates a large amount of discharge plasma (dielectric barrier discharge). This plasma discharge excites atoms of the discharge gas (noble gas) and instantaneously converts them into an excimer state. When the atoms return from the excimer state to the ground state, light having a wavelength in a range specific to that excimer is emitted.

The gas used for the excimer lamp may be any conventionally used gas as long as the gas causes emission of light at 200 nm or less. As the gas, a noble gas such as Xe, Ar, or Kr, or a mixed gas of a noble gas with a halogen gas, such as ArBr or ArF, can be used. The excimer lamp emits light of different wavelengths (center wavelengths) depending on the gas, such as about 172 nm (Xe), about 126 nm (Ar), about 146 nm (Kr), about 165 nm (ArBr), and about 193 nm (ArF).

In consideration of the magnitude of photon energy and the difference between the wavelength and the bond energy of organic matter, a xenon lamp that emits excimer light having a center wavelength of 172 nm is preferably used as a light source. Also in consideration of facility maintenance costs, material availability, and the like, a xenon lamp is preferably used as a light source.

The second irradiation step is performed under an atmosphere having a low oxygen concentration. Oxygen has a high absorption coefficient for light at 200 nm or less. Thus, the second irradiation step is preferably performed, for example, under a nitrogen gas atmosphere. The oxygen concentration of the gas phase in the second irradiation step, or the concentration of the residual oxygen in the reactive atmosphere, is preferably 2,000 ppm or less and more preferably 1,000 ppm or less.

The oxygen in the atmosphere inhibits radical polymerization. Thus, the concentration of the residual oxygen in the reactive atmosphere influences wrinkling in the surface of the coating film. Thus, when the concentration of the residual oxygen in the reactive atmosphere is changed, the surface texture of the surface protection layer 5 may change.

The integrated light intensity of the second irradiation light is preferably 0.5 mJ/cm$^2$ or more and 200 mJ/cm$^2$ or less, more preferably 1 mJ/cm$^2$ or more and 100 mJ/cm$^2$ or less, and still more preferably 3 mJ/cm$^2$ or more and 50 mJ/cm$^2$ or less. When the integrated light intensity is reduced, the expansion of the cured film in an in-plane direction is reduced. When the integrated light intensity is increased, the surface state of the coating film deteriorates.

After the second irradiation step is ended, the third irradiation step is performed. In the third irradiation step, the coating film is irradiated with third radiation or irradiation light to cure the entire coating film. As a result, the surface protection layer 5 is obtained.

The third radiation or irradiation light is ionizing radiation such as an electron beam or ultraviolet radiation having a wavelength longer than the second radiation.

When the third radiation or irradiation light is ultraviolet radiation, the integrated light intensity of the third irradiation light is preferably 10 mJ/cm$^2$ or more and 500 mJ/cm$^2$ or less, more preferably 50 mJ/cm$^2$ or more and 400 mJ/cm$^2$ or less, and still more preferably 100 mJ/cm$^2$ or more and 300 mJ/cm$^2$ or less.

The decorative sheet 1 can be produced by, for example, the foregoing method. The decorative sheet 1 may also be produced by another method. For example, the method described above for the surface protection layer 5 may be used to form a plate, and this plate may be used for transfer to form the surface protection layer 5 having an uneven structure in its surface.

<3> Advantageous Effects

In the decorative sheet 1 described with reference to Figs. 1 to 3, the surface protection layer 5 has the above-described surface texture. The decorative sheet 1 provides a smooth and uniform feel to a user when the user runs their skin over the surface of the surface protection layer 5, for example, when the user runs a finger over the surface of the surface protection layer 5. That is, the decorative sheet 1 allows the user to run a finger with slight friction over the surface of the surface protection layer 5 without feeling the presence of large unevenness.

The decorative sheet 1 that provides the user with a smooth feel is suitable for uses where the sheet is frequently in contact with the user's skin or the sheet is in contact with the user's skin for a long time, such as uses for furniture. An article including the decorative sheet 1 causes no discomfort to the user when the user's skin touches the article.

The surface protection layer 5 of the decorative sheet 1 has the above-described surface texture and can thus achieve a low gloss level without containing a matting agent (matting additive). Because a matting agent reduces the oil repellency of a layer formed from a resin material, the surface protection layer containing a matting agent is prone to fingerprints. The surface protection layer 5 containing no matting agent is less likely to absorb oil and thus resistant to fingerprints. In addition, the surface protection layer 5 having high oil repellency is less likely to be oil-stained or adsorb contaminants. Furthermore, the surface protection layer 5 containing no matting agent causes no matting agent particles to detach when the surface is scratched, and accordingly, the decorative sheet 1 including the surface protection layer 5 is less likely to change in gloss or receive scratches.

The surface protection layer 5 having the above-described surface texture can be obtained by the above-described method for the following reasons.

The oxygen in the gas phase absorbs short-wavelength ultraviolet radiation and also inhibits radical polymerization. Within the coating film made from the ionizing radiation-curable resin, the influence of the oxygen in the gas phase on radical polymerization is greatest in the region adjacent to the gas phase and decreases as distance from the surface of the coating film increases. Therefore, in the second irradiation step, the oxygen concentration of the gas phase can be varied to change the relationship between distance from the surface of the coating film and the progress of cross-linking reactions.

The change in this relationship also changes the thickness of the cured film formed on the surface of the coating film in the second irradiation step and the degree of the expansion of the cured film in the in-plane direction that depends on the progress of cross-linking reactions. The thickness of the cured film and the degree of the expansion of the cured film in the in-plane direction are also influenced by the integrated light intensity in the second irradiation step. The thickness of the cured film and the degree of the expansion of the cured film in the in-plane direction influence the surface texture of the surface protection layer. Furthermore, the thickness of the coating film also influences wrinkling.

Thus, for example, the composition of the ionizing radiation-curable resin, the thickness of the coating film, the oxygen concentration of the gas phase in the second irradiation step, and the integrated light intensity in the second irradiation step can appropriately be determined to obtain a surface protection layer having a desired surface texture.

Examples

Examples of the present invention will be described below.

<Example 1>

The decorative sheet 1 described with reference to Figs. 1 to 3 was produced by the following method. In this example, the transparent resin layer 4, the primer layer 6, the adhesive layer 7, and the concealing layer 8 were omitted.

First, impregnated paper having a basis weight of 50 g/m$^2$ (GFR-506 manufactured by Kohjin Co., Ltd.) was prepared as the primary film layer 2. On one surface of the primary film layer 2, the pattern layer 3 was formed with gravure printing ink based on oil-based nitrocellulose resin (all were PCNT (PCRNT) colors manufactured by Toyo Ink Co., Ltd.).

Next, the pattern layer 3 was coated with the surface protection layer coating solution. The surface protection layer coating solution used was obtained by blending the following ionizing radiation-curable resin with the following particles.

• Ionizing radiation-curable resin

Type: ethylene glycol diacrylate (9 mol EO added)
Product name: Light Acrylate 9EG-A (manufactured by Kyoeisha Chemical Co., Ltd.)
Blended: 100 parts by mass

• Particles

Product name: SYLYSIA (registered trademark) 250N (manufactured by Fuji Silysia Chemical, Ltd.)
Particle size: 5 $\mu$m
Blended: 2 parts by mass

• Photoinitiator

Product name: Irgacure 184 (BASF Japan Ltd.)
Blended: 1 part by mass

The coating film made from the surface protection layer coating solution was formed to a thickness of 5 $\mu$m.

The first irradiation step was then performed. Specifically, in atmospheric air, a high pressure mercury lamp was used to irradiate the surface of the coating film made from the surface protection layer coating solution with ultraviolet radiation having a peak wavelength of 365 nm to an integrated light intensity of 50 mJ/cm$^2$. This irradiation partially cured the coating film.

Next, the second irradiation step was performed. Specifically, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 50 mJ/cm$^2$. This irradiation produced wrinkling on the surface of the coating film.

Finally, the third irradiation step was performed. Specifically, the coating film was irradiated with ionizing radiation to cure the entire coating film, thereby forming the surface protection layer 5.

In this manner, the decorative sheet 1 was obtained.

<Example 2>

The decorative sheet 1 was produced by the same method as in Example 1 except for the following. More specifically, in this example, the following ionizing radiation-curable resin was used.

• Ionizing radiation-curable resin

Type: trimethylolpropane EO-modified triacrylate (6 mol EO added)
Product name: Miramer M3160 (manufactured by Miwon Specialty Chemical Co., Ltd.)

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 50 mJ/cm$^2$.

<Example 3>

The decorative sheet 1 was produced by the same method as in Example 2 except for the following. More specifically, in this example, the amount of the contained particles described below was changed.

• Particles

Product name: SYLYSIA 250N (manufactured by Fuji Silysia Chemical Ltd.)
Particle size: 5 $\mu$m
Blended: 1.3 parts by mass

<Example 4>

The decorative sheet 1 was produced by the same method as in Example 2 except for the following. More specifically, in this example, the amount of the contained particles described below was changed.

• Particles

Product name: SYLYSIA 250N (manufactured by Fuji Silysia Chemical Ltd.)
Particle size: 5 $\mu$m
Blended: 15 parts by mass

<Example 5>

The decorative sheet 1 was produced by the same method as in Example 2 except for the following. More specifically, in this example, the amount of the contained particles described below was changed.

• Particles

Product name: SYLYSIA 250N (manufactured by Fuji Silysia Chemical Ltd.)
Particle size: 5 $\mu$m
Blended: 22 parts by mass

<Example 6>

The decorative sheet 1 was produced by the same method as in Example 1 except for the following. More specifically, in this example, the following ionizing radiation-curable resin was used.

• Ionizing radiation-curable resin

Type: trimethylolpropane EO-modified triacrylate (15 mol EO added)
Product name: SR9035 (manufactured by Sartomer)

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 50 mJ/cm$^2$.

<Example 7>

The decorative sheet 1 was produced by the same method as in Example 1 except for the following. More specifically, in this example, the following ionizing radiation-curable resin was used.

• Ionizing radiation-curable resin

Type: trimethylolpropane EO-modified triacrylate (3 mol EO added)
Product name: Miramer M3130 (manufactured by Miwon Specialty Chemical Co., Ltd.)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 100 mJ/cm$^2$.

<Example 8>

The decorative sheet 1 was produced by the same method as in Example 1 except for the following. More specifically, in this example, the following ionizing radiation-curable resin was used.

• Ionizing radiation-curable resin

Type: Trimethylolpropane PO-modified triacrylate (6 mol PO added)
Product name: NK ESTER A-TMPT-6PO (manufactured by SHIN-NAKAMURA CHEMICAL Co., Ltd.)

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 50 mJ/cm$^2$.

<Example 9>

The decorative sheet 1 was produced by the same method as in Example 1 except for the following. More specifically, in this example, the following ionizing radiation-curable resin was used.

• Ionizing radiation-curable resin

Type: caprolactone-modified tris-(2-acryloxyethyl)isocyanurate (3 mol caprolactone (CL) added)
Product name: NK ESTER A-9300-3CL (manufactured by SHIN-NAKAMURA CHEMICAL Co., Ltd.)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 100 mJ/cm$^2$.

<Example 10>

The decorative sheet 1 was produced by the same method as in Example 1 except for the following. More specifically, in this example, the following ionizing radiation-curable resin was used. The coating film made from the surface protection layer coating solution was formed to a thickness of 1 μm.

• Ionizing radiation-curable resin

Type: trimethylolpropane EO-modified triacrylate (6 mol EO added)
Product name: Miramer M3160 (manufactured by Miwon Specialty Chemical Co., Ltd.)

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 10 mJ/cm$^2$.

<Example 11>

The decorative sheet 1 was produced by the same method as in Example 1 except for the following. More specifically, in this example, the following ionizing radiation-curable resin was used. The coating film made from the surface protection layer coating solution was formed to a thickness of 2 $\mu$m.

• Ionizing radiation-curable resin

    Type: trimethylolpropane EO-modified triacrylate (6 mol EO added)
    Product name: Miramer M3160 (manufactured by Miwon Specialty Chemical Co., Ltd.)

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 10 mJ/cm$^2$.

<Example 12>

The decorative sheet 1 was produced by the same method as in Example 1 except for the following. More specifically, in this example, the following ionizing radiation-curable resin was used. The coating film made from the surface protection layer coating solution was formed to a thickness of 9 $\mu$m.

• Ionizing radiation-curable resin

    Type: trimethylolpropane EO-modified triacrylate (3 mol EO added)
    Product name: Miramer M3130 (manufactured by Miwon Specialty Chemical Co., Ltd.)

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 150 mJ/cm$^2$.

<Example 13>

The decorative sheet 1 was produced by the same method as in Example 1 except for the following. More specifically, in this example, the following ionizing radiation-curable resin was used.

• Ionizing radiation-curable resin

    Type: ethoxylated pentaerythritol tetraacrylate (35 mol EO added)
    Product name: NK Ester ATM-35E (manufactured by Shin-Nakamura Chemical Co., Ltd.)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 50 mJ/cm$^2$.

<Example 14>

The decorative sheet 1 was produced by the same method as in Example 1 except for the following. More specifically, in this example, the following ionizing radiation-curable resin was used.

• Ionizing radiation-curable resin

Type: ethoxylated pentaerythritol tetraacrylate (50 mol EO added)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 50 mJ/cm$^2$.

<Example 15>

The decorative sheet 1 was produced by the same method as in Example 1 except for the following. More specifically, in this example, the following ionizing radiation-curable resin was used.

• Ionizing radiation-curable resin

Type: ethoxylated pentaerythritol tetraacrylate (20 mol EO added)

In the second irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm$^2$.

<Example 16>

The decorative sheet 1 was produced by the same method as in Example 1 except for the following. More specifically, in this example, the following ionizing radiation-curable resin was used.

• Ionizing radiation-curable resin

Type: propoxylated pentaerythritol tetraacrylate (35 mol PO added)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 50 mJ/cm$^2$.

<Example 17>

The decorative sheet 1 was produced by the same method as in Example 1 except for the following. More specifically, in this example, the following ionizing radiation-curable resin was used.

• Ionizing radiation-curable resin

Type: caprolactone-modified pentaerythritol tetraacrylate (20 mol CL added)

In the second irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm$^2$.

<Example 18>

The decorative sheet 1 was produced by the same method as in Example 1 except for the following. More specifically, in this example, the following ionizing radiation-curable resin was used. The coating film made from the surface protection layer coating solution was formed to a thickness of 1 $\mu$m.

• Ionizing radiation-curable resin

Type: ethoxylated pentaerythritol tetraacrylate (35 mol EO added)
Product name: NK Ester ATM-35E (manufactured by Shin-Nakamura Chemical Co., Ltd.)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 10 mJ/cm$^2$.

<Example 19>

The decorative sheet 1 was produced by the same method as in Example 1 except for the following. More specifically, in this example, the following ionizing radiation-curable resin was used. The coating film made from the surface protection layer coating solution was formed to a thickness of 2 μm.

• Ionizing radiation-curable resin

Type: ethoxylated pentaerythritol tetraacrylate (35 mol EO added)
Product name: NK Ester ATM-35E (manufactured by Shin-Nakamura Chemical Co., Ltd.)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 10 mJ/cm$^2$.

<Example 20>

The decorative sheet 1 was produced by the same method as in Example 1 except for the following. More specifically, in this example, the following ionizing radiation-curable resin was used. The coating film made from the surface protection layer coating solution was formed to a thickness of 9 μm.

• Ionizing radiation-curable resin

Type: ethoxylated pentaerythritol tetraacrylate (20 mol EO added)
In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 150 mJ/cm$^2$.

<Example 21>

The decorative sheet 1 was produced by the same method as in Example 1 except for the following. More specifically, in this example, the following ionizing radiation-curable resin was used.

• Ionizing radiation-curable resin

Type: ethoxylated dipentaerythritol hexaacrylate (12 mol EO added)
In the second irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 150 mJ/cm$^2$.

<Example 22>

The decorative sheet 1 was produced by the same method as in Example 1 except for the following. More specifically, in this example, the following ionizing radiation-curable resin was used.

• Ionizing radiation-curable resin 1

Trimethylolpropane EO-modified triacrylate (6 mol EO added)
Product name: Miramer M3160 (manufactured by Miwon Specialty Chemical Co., Ltd.)
Blended: 60 parts by mass

• Ionizing radiation-curable resin 2

Type: dipentaerythritol hexaacrylate
Product name: Miramer M600 (manufactured by Miwon Specialty Chemical Co., Ltd.)
Blended: 40 parts by mass

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 10 mJ/cm$^2$.

<Example 23>

The decorative sheet 1 was produced by the same method as in Example 1 except for the following. More specifically, in this example, the following ionizing radiation-curable resin was used.

• Ionizing radiation-curable resin 1

Trimethylolpropane EO-modified triacrylate (6 mol EO added)
Product name: Miramer M3160 (manufactured by Miwon Specialty Chemical Co., Ltd.)
Blended: 40 parts by mass

• Ionizing radiation-curable resin 2

Type: dipentaerythritol hexaacrylate
Product name: Miramer M600 (manufactured by Miwon Specialty Chemical Co., Ltd.)
Blended: 60 parts by mass

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 10 mJ/cm$^2$.

<Example 24>

The decorative sheet 1 was produced by the same method as in Example 1 except for the following. More specifically, in this example, the following ionizing radiation-curable resin was used. The coating film made from the surface protection layer coating solution was formed to a thickness of 14 μm.

• Ionizing radiation-curable resin 1

Trimethylolpropane EO-modified triacrylate (6 mol EO added)
Product name: Miramer M3160 (manufactured by Miwon Specialty Chemical Co., Ltd.)
Blended: 40 parts by mass

• Ionizing radiation-curable resin 2

Type: dipentaerythritol hexaacrylate
Product name: Miramer M600 (manufactured by Miwon Specialty Chemical Co., Ltd.)
Blended: 60 parts by mass

In the second irradiation step, at atmospheric pressure, under a nitrogen gas atmosphere having an oxygen concentration of 100 ppm, a Xe excimer lamp was used to irradiate the surface of the coating film made from the surface protection layer coating solution with ultraviolet radiation having a wavelength of 172 nm to an integrated light intensity of 100 mJ/cm$^2$.

<Comparative Example 1>

The decorative sheet was produced by the same method as in Example 1 except for the following. More specifically, in this example, the surface protection layer coating solution used was obtained by blending the following ionizing radiation-curable resin with the following particles.

• Ionizing radiation-curable resin

Type: trimethylolpropane EO-modified triacrylate (6 mol EO added)
Product name: Miramer M3160 (manufactured by Miwon Specialty Chemical Co., Ltd.)
Blended: 100 parts by mass

• Particles

Product name: SYLYSIA 250N (manufactured by Fuji Silysia Chemical Ltd.)
Particle size: 5 μm
Blended: 15 parts by mass

In addition, the first irradiation step and the second irradiation step were not performed, and the coating film made from the surface protection layer coating solution was cured only in the third irradiation step.

<Comparative Example 2>

The decorative sheet was produced by the same method as in Example 1 except for the following. More specifically, in this example, the surface protection layer coating solution used was obtained by blending the following ionizing radiation-curable resin with the following particles.

• Ionizing radiation-curable resin

Type: ethoxylated pentaerythritol tetraacrylate (35 mol EO added)
Product name: NK Ester ATM-35E (manufactured by Shin-Nakamura Chemical Co., Ltd.)

Blended: 100 parts by mass

• Particles

Product name: SYLYSIA 250N (manufactured by Fuji Silysia Chemical Ltd.)
Particle size: 5 $\mu$m
Blended: 15 parts by mass

In addition, the first irradiation step and the second irradiation step were not performed, and the coating film made from the surface protection layer coating solution was cured only in the third irradiation step.

<Comparative Example 3>

The decorative sheet was produced by the same method as in Example 1 except for the following. More specifically, in this example, the following ionizing radiation-curable resin was used. The coating film made from the surface protection layer coating solution was formed to a thickness of 10 $\mu$m.

• Ionizing radiation-curable resin

Type: trimethylolpropane EO-modified triacrylate (6 mol EO added)
Product name: Miramer M3160 (manufactured by Miwon Specialty Chemical Co., Ltd.)

In the second irradiation step, at atmospheric pressure, under a nitrogen gas atmosphere having an oxygen concentration of 500 ppm, a Xe excimer lamp was used to irradiate the surface of the coating film made from the surface protection layer coating solution with ultraviolet radiation having a wavelength of 172 nm to an integrated light intensity of 150 mJ/cm$^2$.

<Comparative Example 4>

The decorative sheet was produced by the same method as in Example 1 except for the following. More specifically, in this example, the following ionizing radiation-curable resin was used. The coating film made from the surface protection layer coating solution was formed to a thickness of 10 $\mu$m.

• Ionizing radiation-curable resin

Type: ethoxylated pentaerythritol tetraacrylate (35 mol EO added)
Product name: NK Ester ATM-35E (manufactured by Shin-Nakamura Chemical Co., Ltd.)

In the second irradiation step, at atmospheric pressure, under a nitrogen gas atmosphere having an oxygen concentration of 200 ppm, a Xe excimer lamp was used to irradiate the surface of the coating film made from the surface protection layer coating solution with ultraviolet radiation having a wavelength of 172 nm to an integrated light intensity of 150 mJ/cm$^2$.

<Comparative Example 5>

The decorative sheet was produced by the same method as in Example 1 except for the following. More specifically, in this example, the particles (SYLYSIA 250N) were not contained.

<Evaluation>

Each of the above decorative sheets was evaluated as follows.

(1) Gloss Level

The gloss level was determined by using Rhopoint IQ (manufactured by Konica Minolta, Inc.) to measure the 60-degree gloss level. In tables 1 to 4 below, "60° GLOSS VALUE" represents the 60-degree gloss level.

(3) Tactile Sensation

The tactile sensation was evaluated by the following method.

First, preparations were made to achieve consistency of evaluation criteria among evaluators. Specifically, ten standard test pieces having different surface textures were prepared. Next, 20 blindfolded evaluators were each asked to slide a finger on the surface of each standard test piece and then asked to classify the tactile feels thereof into the following five groups.

First group: felt substantially no unevenness and felt slight friction
Second group: felt slight unevenness or felt moderate friction
Third group: felt an intermediate texture between the texture in the first group and the texture in the second group
Fourth group: felt large unevenness
Fifth group: felt no unevenness and felt significant friction

The above procedure was repeated until each evaluator's evaluations matched three or more times in succession and evaluation results among the evaluators matched three times in succession.

Next, for each of the decorative sheets, the evaluators blindfolded were each asked to slide a finger on the surface of the surface protection layer and then asked to classify the feels thereof into the above-mentioned five groups. Then, this procedure was repeated until each evaluator's evaluations matched three or more times in succession and evaluation results among the evaluators matched three times in succession. Based on these results, the tactile sensation was evaluated in accordance with the following criteria:

AAA (smooth): first group
AA (smooth): third group
A (smooth): second group
B (rough or smooth with grip): fourth group or fifth group

(3) Uniformity of Tactile Feel

The 20 evaluators who had evaluated the tactile sensation then evaluated the uniformity of the tactile feel by the following method.

A test piece with a size of 10 cm × 10 cm was cut out of each decorative sheet. The 20 evaluators were each blindfolded and asked to slide a finger freely across the entire surface of the surface protection layer in each test piece and then asked to classify the uniformity of the tactile feels thereof into the following three groups based on the presence or absence or the degree of variations in the tactile sensation (smooth feel).

First group: detected no areas with irregular tactile sensation (smooth feel)
Second group: detected areas with irregular tactile sensation (smooth feel), with slight variations
Third group: detected areas with irregular tactile sensation (smooth feel), with noticeable variations

Then, this procedure was repeated until each evaluator's evaluations matched three or more times in succession and evaluation results among the evaluators matched three times in succession. Based on these results, the uniformity of the tactile feel was evaluated in accordance with the following criteria. It should be noted that the decorative sheets in Comparative Examples 1 to 4, in which the tactile sensation was rated B, did not undergo this evaluation.

AA: first group
A: second group
B: third group

(4) Fingerprint Resistance

As an evaluation of fingerprint resistance, an evaluation of fingerprint wipe-off properties was conducted.

Specifically, first, the 60-degree gloss level of the surface of the decorative sheets was measured, and the 60-degree gloss level was defined as an initial gloss level. Subsequently, a fingerprint-resistance evaluation solution was applied to the surface protection layer and the fingerprint-resistance evaluation solution on the surface of the decorative sheet was wiped off. Here, as the fingerprint-resistance evaluation solution, a higher fatty acid was used. Thereafter, the 60-degree gloss level of the part from which the fingerprint-resistance evaluation solution had been wiped off was measured, and the 60-degree gloss level was defined as a post-wipe-off gloss level.

The fingerprint wipe-off rate was calculated from the following equation:

Fingerprint wipe-off rate (%) = (post-wipe-off gloss level/initial gloss level) $\times$ 100

The evaluation criteria were as follows.

AA: 70% or more and less than 250%
A: 50% or more and less than 70%, or 250% or more and less than 300%
B: less than 50% or 300% or more

(5) Contamination Resistance

The contamination A test defined in Japanese Agricultural Standards (JAS) was conducted for an evaluation of contamination resistance. More specifically, 10 mm wide lines were drawn with blue ink, quick drying black ink, and red crayon on the surface protection layer of each decorative sheet and left for four hours. After that, the blue ink, quick drying black ink, and red crayon lines were wiped with a cloth moistened with ethanol.

The evaluation criteria were as follows.

AA: all the color lines could be easily wiped off.
A: part of the color lines could be wiped off but stains were partially left.
B: the color lines could not be wiped off.

(6) Scratch Resistance Test

The decorative sheets were each bonded to a wooden substrate B using a urethane-based adhesive. Then, a steel wool rubbing test was conducted for an evaluation of scratch resistance. Specifically, the decorative sheet was rubbed for 20 strokes with steel wool at a load of 100 g and checked by visual inspection for scratches or change in gloss that occurred on the surface of the decorative sheet.

The evaluation criteria were as follows.

AA: neither scratches nor change in gloss occurred on the surface
A: slight scratches and/or change in gloss occurred on the surface
B: severe scratches and/or change in gloss occurred on the surface

[Table 1]

| | | EX. 1 | EX. 2 | EX. 3 | EX. 4 | EX. 5 | EX. 6 | EX. 7 | EX. 8 | EX. 9 |
|---|---|---|---|---|---|---|---|---|---|---|
| SURFACE SHAPE | | RIDGED | RIDGED | RIDGED | RIDGED | RIDGED | RIDGED | RIDGED | RIDGED | RIDGED |
| SURFACE ROUGHNESS | Rpk (μm) | 1.9 | 2.6 | 2.6 | 2.9 | 2.8 | 2.4 | 2.5 | 2.7 | 1.8 |
| | Rsm (μm) | 286.5 | 311.5 | 312.4 | 152.0 | 150.6 | 185.6 | 346.3 | 318.5 | 340.5 |
| {Si/(C + O + Si)} × 100 | | 0.8 | 0.8 | 0.5 | 5 | 7 | 0.8 | 0.8 | 0.8 | 0.8 |
| THICKNESS (μm) | | 5 | 5 | 5 | 5 | 5 | 5 | 5 | 5 | 5 |
| ACRYLIC RESIN 1 | PERCENTAGE | 100 | 100 | 100 | 100 | 100 | 100 | 100 | 100 | 100 |
| | NUMBER OF FUNCTIONAL GROUPS | 2 | 3 | 3 | 3 | 3 | 3 | 3 | 3 | 3 |
| | REPEATING STRUCTURE — STRUCTURE | C2H4O | C2H4O | C2H4O | C2H4O | C2H4O | C2H4O | C2H4O | C3H6O | C6H10O2 |
| | REPEATING STRUCTURE — NUMBER OF REPEAT UNITS | 9 | 6 | 6 | 6 | 6 | 15 | 3 | 6 | 3 |
| ACRYLIC RESIN 2 | PERCENTAGE | - | - | - | - | - | - | - | - | - |
| | NUMBER OF FUNCTIONAL GROUPS | - | - | - | - | - | - | - | - | - |
| | REPEATING STRUCTURE | - | - | - | - | - | - | - | - | - |
| | STRUCTURE — NUMBER OF REPEAT UNITS | - | - | - | - | - | - | - | - | - |
| 60° GLOSS VALUE | | 3.1 | 3.0 | 2.8 | 1.7 | 1.2 | 1.8 | 4.3 | 3.1 | 4.8 |
| TACTILE SENSATION | SMOOTH | AA | AA | AA | AA | AA | AAA | A | AA | A |
| UNIFORMITY OF TACTILE FEEL | | AA | AA | AA | AA | AA | AA | AA | AA | AA |
| FINGERPRINT RESISTANCE | | AA | AA | AA | AA | AA | AA | AA | AA | AA |
| CONTAMINATION RESISTANCE | CONTAMINANT A | AA | AA | AA | AA | A | AA | AA | AA | AA |
| SCRATCH RESISTANCE | STEEL | A | AA | AA | AA | A | AA | AA | AA | AA |

[Table 2]

| | | | EX. 10 | EX. 11 | EX. 12 | EX. 13 | EX. 14 | EX. 15 | EX. 16 | EX. 17 |
|---|---|---|---|---|---|---|---|---|---|---|
| SURFACE SHAPE | | | RIDGED | RIDGED | RIDGED | RIDGED | RIDGED | RIDGED | RIDGED | RIDGED |
| SURFACE ROUGHNESS | | Rpk ($\mu$m) | 0.3 | 0.7 | 3.1 | 2.6 | 2.4 | 2.4 | 2.4 | 2.3 |
| | | RSm ($\mu$m) | 150.0 | 186.5 | 298.6 | 308.5 | 196.3 | 344.0 | 296.5 | 348.7 |
| {Si/(C + O + Si)} $\times$ 100 | | | 0.8 | 0.8 | 0.8 | 0.8 | 0.8 | 0.8 | 0.8 | 0.8 |
| THICKNESS ($\mu$m) | | | 1 | 2 | 9 | 5 | 5 | 5 | 5 | 5 |
| ACRYLIC RESIN 1 | PERCENTAGE | | 100 | 100 | 100 | 100 | 100 | 100 | 100 | 100 |
| | NUMBER OF FUNCTIONAL GROUPS | | 3 | 3 | 3 | 4 | 4 | 4 | 4 | 4 |
| | REPEATING STRUCTURE | STRUCTURE | C2H4O | C2H4O | C2H4O | C2H4O | C2H4O | C2H4O | C3H6O | C6H10O2 |
| | | NUMBER OF REPEAT UNITS | 6 | 6 | 3 | 35 | 50 | 20 | 35 | 20 |
| ACRYLIC RESIN 2 | PERCENTAGE | | - | - | - | - | - | - | - | - |
| | NUMBER OF FUNCTIONAL GROUPS | | - | - | - | - | - | - | - | - |
| | REPEATING STRUCTURE | STRUCTURE | - | - | - | - | - | - | - | - |
| | | NUMBER OF REPEAT UNITS | - | - | - | - | - | - | - | - |
| 60° GLOSS VALUE | | | 8.0 | 6.2 | 3.2 | 2.8 | 1.7 | 4.5 | 3.0 | 4.1 |
| TACTILE SENSATION | | SMOOTH | A | AA | A | AA | AAA | A | AA | A |
| UNIFORMITY OF TACTILE FEEL | | | AA | AA | AA | AA | AA | AA | AA | AA |
| FINGERPRINT RESISTANCE | | | AA | AA | AA | AA | AA | AA | AA | AA |
| CONTAMINATION RESISTANCE | | CONTAMINANT A | AA | AA | AA | AA | AA | AA | AA | AA |
| SCRATCH RESISTANCE | | STEEL | AA | AA | AA | AA | AA | AA | AA | AA |

EP 4 647 251 A1

[Table 3]

| | | | EX. 18 | EX. 19 | EX. 20 | EX. 21 | EX. 22 | EX. 23 | EX. 24 |
|---|---|---|---|---|---|---|---|---|---|
| SURFACE SHAPE | | | RIDGED | RIDGED | RIDGED | RIDGED | RIDGED | RIDGED | RIDGED |
| SURFACE ROUGHNESS | | Rpk ($\mu$m) | 0.4 | 0.7 | 2.9 | 0.9 | 0.2 | 0.2 | 2.9 |
| | | RSm ($\mu$m) | 152.3 | 202.5 | 321.6 | 358.6 | 534.2 | 784.3 | 230.8 |
| $\{Si/(C + O + Si)\} \times 100$ | | | 0.8 | 0.8 | 0.8 | 0.8 | 0.8 | 0.8 | 0.8 |
| THICKNESS ($\mu$m) | | | 1 | 2 | 9 | 5 | 5 | 5 | 14 |
| ACRYLIC RESIN 1 | PERCENTAGE | | 100 | 100 | 100 | 100 | 60 | 40 | 40 |
| | NUMBER OF FUNCTIONAL GROUPS | | 4 | 4 | 4 | 6 | 3 | 3 | 3 |
| | REPEATING STRUCTURE | STRUCTURE | C2H4O | C2H4O | C2H4O | C2H4O | C2H4O | C2H4O | C2H4O |
| | | NUMBER OF REPEAT UNITS | 35 | 35 | 20 | 12 | 6 | 6 | 6 |
| ACRYLIC RESIN 2 | PERCENTAGE | | - | - | - | - | 40 | 60 | 60 |
| | NUMBER OF FUNCTIONAL GROUPS | | - | - | - | - | 6 | 6 | 6 |
| | REPEATING STRUCTURE | STRUCTURE | - | - | - | - | - | - | - |
| | | NUMBER OF REPEAT UNITS | - | - | - | - | - | - | - |
| 60° GLOSS VALUE | | | 8.0 | 5.8 | 3.6 | 8.0 | 12 | 18 | 7.2 |
| TACTILE SENSATION | | SMOOTH | A | AA | A | AA | A | A | A |
| UNIFORMITY OF TACTILE FEEL | | | AA | AA | AA | AA | AA | AA | AA |
| FINGERPRINT RESISTANCE | | | AA | AA | AA | AA | AA | AA | AA |
| CONTAMINATION RESISTANCE | | CONTAMINANT A | AA | AA | AA | AA | AA | AA | AA |
| SCRATCH RESISTANCE | | STEEL | AA | AA | AA | AA | AA | AA | AA |

EP 4 647 251 A1

[Table 4]

| | | | COMP. EX. 1 | COMP. EX. 2 | COMP. EX. 3 | COMP. EX. 4 | COMP. EX. 5 |
|---|---|---|---|---|---|---|---|
| SURFACE SHAPE | | | UNEVENNESS DUE TO PARTICLES | UNEVENNESS DUE TO PARTICLES | RIDGED | RIDGED | RIDGED |
| SURFACE ROUGHNESS | Rpk ($\mu$m) | | 0.4 | 0.4 | 4.3 | 4.2 | 1.8 |
| | RSm ($\mu$m) | | 1050.2 | 986.3 | 286.5 | 296.0 | 340.2 |
| $\{Si/(C + O + Si)\} \times 100$ | | | 5 | 5 | 0.8 | 0.8 | 0 |
| THICKNESS ($\mu$m) | | | 5 | 5 | 10 | 10 | 5 |
| ACRYLIC RESIN 1 | PERCENTAGE | | 100 | 100 | 100 | 100 | 100 |
| | NUMBER OF FUNCTIONAL GROUPS | | 3 | 4 | 3 | 4 | 3 |
| | REPEATING STRUCTURE | STRUCTURE | C2H4O | C2H4O | C2H4O | C2H4O | C2H4O |
| | | NUMBER OF REPEAT UNITS | 6 | 35 | 6 | 35 | 6 |
| ACRYLIC RESIN 2 | PERCENTAGE | | - | - | - | - | - |
| | NUMBER OF FUNCTIONAL GROUPS | | - | - | - | - | - |
| | REPEATING STRUCTURE | STRUCTURE | - | - | - | - | - |
| | | NUMBER OF REPEAT UNITS | - | - | - | - | - |
| 60° GLOSS VALUE | | | 10 | 10 | 2.1 | 2.2 | 4.2 |
| TACTILE SENSATION | SMOOTH | | B | B | B | B | AA |
| UNIFORMITY OF TACTILE FEEL | | | - | - | - | - | B |
| FINGERPRINT RESISTANCE | | | B | B | AA | AA | AA |
| CONTAMINATION RESISTANCE | CONTAMINANT A | | B | B | AA | AA | AA |
| SCRATCH RESISTANCE | STEEL | | B | B | AA | AA | AA |

As listed in tables 1 to 3, the decorative sheets according to Examples 1 to 24 provided the evaluators with a smooth and uniform feel. The decorative sheets according to Examples 1 to 24 had low gloss, high fingerprint resistance, high contamination resistance, and high scratch resistance. In contrast, as listed in table 4, the decorative sheets in Comparative Examples 1 and 2 provided the evaluators with no smooth feel, and their fingerprint resistance, contamination resistance, and scratch resistance were poor. Although the decorative sheets according to Comparative Examples 3 and 4 had low gloss, and their fingerprint resistance, contamination resistance, and scratch resistance were good, the decorative sheets provided the evaluators with no smooth feel. Although the decorative sheet according to Comparative Example 5 had low gloss, had good fingerprint resistance, contamination resistance, and scratch resistance, and also provided the evaluators with a smooth feel, the uniformity of the tactile feel was poor.

[Reference Signs List]

1    Decorative sheet
2    Primary film layer
3    Pattern layer
4    Transparent resin layer
5    Surface protection layer

5A      Core portion
5B      Ridged portion
6       Primer layer
7       Adhesive layer
8       Concealing layer
11      Decorative material
B       Substrate

**Claims**

1.  A decorative sheet comprising:

    a primary film layer; and
    a surface protection layer provided on one surface of the primary film layer, wherein
    the surface protection layer has a surface provided with an uneven structure having a plurality of ridged portions protruding in a ridged pattern,
    the uneven structure of the surface protection layer has a reduced peak height Rpk of less than 3.5 $\mu$m, and
    the surface protection layer has a mass concentration of carbon C (% by mass), a mass concentration of oxygen O (% by mass), and a mass concentration of silicon Si (% by mass) satisfying a relational expression:

    $$0.5 \leq \{Si/(C + O + Si)\} \times 100.$$

2.  The decorative sheet according to claim 1, wherein
    the reduced peak height Rpk is 0.5 $\mu$m or more.

3.  The decorative sheet according to claim 1 or 2, wherein
    the surface protection layer has a mass concentration of carbon C (% by mass), a mass concentration of oxygen O (% by mass), and a mass concentration of silicon Si (% by mass) satisfying a relational expression:

    $$0.5 \leq \{Si/(C + O + Si)\} \times 100 \leq 5.0.$$

4.  The decorative sheet according to any one of claims 1 to 3, wherein
    the uneven structure of the surface protection layer has a mean width of roughness profile elements RSm of 800 $\mu$m or less.

5.  The decorative sheet according to any one of claims 1 to 3, wherein
    the uneven structure of the surface protection layer has a mean width of roughness profile elements RSm of 350 $\mu$m or less.

6.  The decorative sheet according to claim 4 or 5, wherein
    the mean width RSm is 10 $\mu$m or more.

7.  The decorative sheet according to any one of claims 1 to 6, wherein
    the surface protection layer has a thickness of 2 $\mu$m or more and 15 $\mu$m or less.

8.  The decorative sheet according to any one of claims 1 to 6, wherein
    the surface protection layer has a thickness of 2 $\mu$m or more and less than 10 $\mu$m.

9.  The decorative sheet according to any one of claims 1 to 8, wherein
    the surface protection layer has a gloss level of 20.0 or less.

10. The decorative sheet according to any one of claims 1 to 8, wherein
    the surface protection layer has a gloss level of 10.0 or less.

11. The decorative sheet according to any one of claims 1 to 10, wherein
    at least some portions of the plurality of ridged portions are adjacent to each other in a width direction, and along the at least portions of the plurality of ridged portions adjacent to each other in the width direction, the surface protection layer, in an area with the uneven structure, has a sinusoidal shape in a cross section parallel to the width direction and a thickness direction of the surface protection layer.

**12.** The decorative sheet according to any one of claims 1 to 11, wherein

the surface protection layer contains a cured product of an ionizing radiation-curable resin, the ionizing radiation-curable resin comprises, as a main component, acrylate having a repeating structure,
the repeating structure comprises any one of ethylene oxide, propylene oxide, and ε-caprolactone, and
the repeating structure has three or more repeat units.

**13.** The decorative sheet according to any one of claims 1 to 11, wherein

the surface protection layer contains a cured product of an ionizing radiation-curable resin,
the ionizing radiation-curable resin comprises acrylate as a main component, the acrylate comprises a first acrylate having a repeating structure and a second acrylate having one to six functional groups, the repeating structure comprises any one of ethylene oxide, propylene oxide, and ε-caprolactone, and the repeating structure has three or more repeat units.

**14.** A decorative material comprising:

the decorative sheet according to any one of claims 1 to 13; and
a substrate to which the decorative sheet is bonded.

FIG.1

FIG.2

FIG.3

## INTERNATIONAL SEARCH REPORT

| International application No. |
| --- |
| **PCT/JP2023/046696** |

### A. CLASSIFICATION OF SUBJECT MATTER

*B32B 3/30*(2006.01)i; *B32B 7/023*(2019.01)i; *B32B 27/00*(2006.01)i; *B32B 27/16*(2006.01)i
FI:  B32B3/30; B32B7/023; B32B27/00 E; B32B27/16 101

According to International Patent Classification (IPC) or to both national classification and IPC

### B. FIELDS SEARCHED

Minimum documentation searched (classification system followed by classification symbols)

B32B1/00-43/00; C08J5/00-5/22; E04F15/00-15/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/239270 A1 (TOPPAN PRINTING CO., LTD.) 17 November 2022 (2022-11-17) whole document | 1-14 |
| A | JP 2021-137990 A (TOPPAN PRINTING CO., LTD.) 16 September 2021 (2021-09-16) entire text | 1-14 |
| A | JP 2007-185606 A (NIPPON PAINT CO., LTD.) 26 July 2007 (2007-07-26) whole document | 1-14 |
| A | JP 2018-144437 A (TOPPAN PRINTING CO., LTD.) 20 September 2018 (2018-09-20) whole document | 1-14 |
| A | WO 2017/033972 A1 (TOPPAN PRINTING CO., LTD.) 02 March 2017 (2017-03-02) whole document | 1-14 |
| A | JP 2020-75420 A (TOPPAN PRINTING CO., LTD.) 21 May 2020 (2020-05-21) whole document | 1-14 |

☐ Further documents are listed in the continuation of Box C.     ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
| --- | --- |
| **21 February 2024** | **05 March 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

# EP 4 647 251 A1

## INTERNATIONAL SEARCH REPORT
### Information on patent family members

International application No.

**PCT/JP2023/046696**

| Patent document cited in search report | | | Publication date (day/month/year) | Patent family member(s) | | | Publication date (day/month/year) |
|---|---|---|---|---|---|---|---|
| WO | 2022/239270 | A1 | 17 November 2022 | US | 2023/0146524 | A1 | |
| | | | | EP | 4116095 | A1 | |
| | | | | CN | 115623867 | A | |
| JP | 2021-137990 | A | 16 September 2021 | US | 2023/0041625 | A1 | |
| | | | | WO | 2021/149480 | A1 | |
| | | | | EP | 4094934 | A1 | |
| | | | | KR | 10-2022-0113746 | A | |
| | | | | CN | 114945463 | A | |
| | | | | AU | 2021210701 | A | |
| JP | 2007-185606 | A | 26 July 2007 | (Family: none) | | | |
| JP | 2018-144437 | A | 20 September 2018 | (Family: none) | | | |
| WO | 2017/033972 | A1 | 02 March 2017 | US | 2018/0264791 | A1 | |
| | | | | EP | 3342589 | A1 | |
| | | | | AU | 2016311950 | A | |
| | | | | CN | 107921765 | A | |
| | | | | KR | 10-2018-0042265 | A | |
| | | | | TW | 201713506 | A | |
| JP | 2020-75420 | A | 21 May 2020 | (Family: none) | | | |

Form PCT/ISA/210 (patent family annex) (July 2022)

**REFERENCES CITED IN THE DESCRIPTION**

**Patent documents cited in the description**

- JP 2019119138 A